# EUROPEAN PATENT APPLICATION

(11) **EP 3 136 330 A1**
(43) Date of publication of application: **01.03.2017**
(21) Application number: 15183026.2
(22) Date of filing: 28.08.2015
(51) Int. Cl.: G06Q 20/40, G06Q 40/08

(54) **ASSESSING CREDIT RISK**

(71) Applicant: MasterCard International Incorporated, Purchase, NY 10577 (US)
(72) Inventor: VERGARI, Fabiano, West Bridgford, NG2 7DU (GB)
(74) Representative: Gill Jennings & Every LLP

(57) **Abstract**

There is provided a computer-implemented method of assessing credit risk, the method comprising the steps of: obtaining non-sufficient funds declines data on past transactions of a plurality of account holders occurring during an outcome window; obtaining transactional data on the past transactions of said plurality of account holders occurring during an observation window that precedes the outcome window; deriving one or more rules based on the occurrence of non-sufficient funds declines during the outcome window and on the preceding transactional data from the observation window; and applying the one or more rules to transactional data on past transactions of an individual account holder occurring during an individual observation window for that individual in order to determine the likelihood of a non-sufficient funds decline occurring during a subsequent individual outcome window for that individual. There is also provided a computer readable medium comprising a set of program instructions. There is further provided a system for assessing credit risk.

## Description

### Field of the Invention

The present invention relates generally to a method for assessing credit risk. More particularly, but not exclusively, it relates to a method for assessing the risk based on non-sufficient funds declines associated with individual account holders.

### Background to the Invention

The problem of financial borrowers failing to make required payments to their issuers or lenders is ongoing. For example, some borrowers may exhibit a lack of financial discipline and have a higher propensity for missing mortgage payments or credit card payments, and as such they are bad debtors. Other borrowers may exhibit trends for making payments early or on time, and as such they are correspondingly good debtors.

Borrowers with high credit risks are often represent liabilities to lenders in that they cause disruptions to cash flows, they induce lost interests and they increase administration processes. Thus, in order to reduce the risk that issuers and lenders undertake, credit checks may be performed on prospective borrowers and appropriate measures may be placed upon the terms of their loan accordingly. Creditors, such as credit card issuers, assess the credit risk of individual account holders (including prospective account holders) in order to predict the behaviours of the individual account holders and assess whether they are likely to experience repayment problems and therefore become bad debtors.

Sometimes, issuers or lenders utilise the information that it has on file about an existing account holder, such as geo-demographic information, or information that has been collated throughout the relationship between the account holder and the issuer or lender, such as product holdings or product usage. Credit scores may be generated using this information.

Credit scores may be also or instead be assigned by credit bureaux, using information such as past credit account transaction history (traits) of the individual account holders that have been collated by a credit bureau. Credit bureau scores may be particularly useful if the account holder being assessed is a prospective account holder and therefore the issuer cannot draw upon its own existing knowledge of the prospective account holder's financial behaviour. If credit bureau scores and issuer account holder scores are both available, then this information may be leveraged together in order to derive an aggregate score.

However, when an issuer is faced with assessing a prospective account holder with little or no credit transaction history: so-called "thin file" customers who have small or no credit footprints or when an issuer has limited information on its own customers (because the issuer has a small customer base, little or no experience of lending products, or is overly conservative to the point where it never observes a significant level or repayment problems, for example), then the issuer or lender may find it difficult to create a score that is meaningful enough to help them make credit decisions.

There is therefore a need to improve the way in which creditors assess risk associated with issuing individual account holders with credit and make credit decisions, especially in situations whereby prior credit behaviour for an individual account holder is unavailable or insufficient.

### Summary of the Invention

In accordance with a first aspect of the present invention, there is provided a computer-implemented method of assessing credit risk, the method comprising the steps of: obtaining non-sufficient funds declines data on past transactions of a plurality of account holders occurring during an outcome window; obtaining transactional data on the past transactions of said plurality of account holders occurring during an observation window that precedes the outcome window; deriving one or more rules based on the occurrence of non-sufficient funds declines during the outcome window and on the preceding transactional data from the observation window; and applying the one or more rules to transactional data on past transactions of an individual account holder occurring during an individual observation window for that individual in order to determine the likelihood of a non-sufficient funds decline occurring during a subsequent individual outcome window for that individual.

It should be understood that "non-sufficient funds decline data" comprises authorisation data associated with accepted and declined card transactions conducted over a specified period of time, and this information is obtained from a plurality of account holders, preferably over a thousand account holders, and more preferably over ten thousand account holders. It should also be understood that "transactional data" comprises information associated with specific past transactions, for example, information on the geographical location or merchant category of the past transaction, or the amount or frequency of transactions of the account holder who performed the past transaction.

The non-sufficient funds declines data is obtained on past transactions of a plurality of account holders occurring during an outcome window, which is a specified period of time for observing behaviour. In some preferred examples, each observation window represents a period of twelve months. The transactional data is obtained of a plurality of account holders occurring during an observation window, which is a specified period of time subsequent to observation window over which it is observed whether the declines have taken place or not. In some preferred examples, each outcome window represents a period of six months.

In other words, by looking at events from the recent past (i.e. past transaction events in the observation window), it is possible to learn from them in order to predict whether the event of interest (i.e. non-sufficient funds declines) will happen in the near future (i.e. in the outcome window). It will be appreciated that the observation window and the outcome window (and similarly the individual observation window and individual outcome window) may never overlap; however, there may be a period of time between the observation window and the outcome window, for example, one month. It will also be appreciated that the observation window and the individual observation window may overlap, or the individual observation window may occur immediately subsequently to the observation window, or the individual observation window may occur subsequently and at a period of time later than the observation window. It will further be appreciated that the outcome window and the individual outcome window may not overlap, but the individual outcome window may occur immediately subsequently to the outcome window, or the individual outcome window may occur subsequently and at a period of time later than the outcome window

The "one or more rules" define an algorithmic model based on the correlation between normalised indices of card activity of the plurality of account holders. The one or more rules are partially based on the non-sufficient funds decline data obtained during the outcome window, and they are partially based on the transactional data obtained during the observation window. In one example of rules based on transactional data, the one or more rules may further be based on trends in a particular geographical location, merchant category, and/or demographic, etc. Alternatively, the one or more rules may be based across a range of geographic locations, merchant categories and/or demographics etc.

By applying the one or more rules to an individual account holder (who may be a holder of a single account or a holder of multiples accounts), the likelihood of a non-sufficient funds decline occurring during a subsequent individual outcome window for an individual account holder can be determined. The one or more rules may be applied at account level for a specific existing account holder of an issuer, or they may be applied more generally, for example, the same one or more rules may be applied for example for certain geographical locations for open-market targeting. As a result of the determined likelihood, a card issuer may choose to impose certain restrictions on the individual account holder (who may be a prospective account holder). For example, the issuer may refuse to issue credit to that individual.

The method for assessing credit risk according to the first aspect of the present invention takes information from a plurality of account holders in order to derive one or more rules to apply to individual account holders, and thus provides for particular advantages in situations where the account issuer has little or no internal information on the existing or prospective account holder that they wish to assess. This is particularly advantageous in situations where the account issuer cannot draw upon sufficient information from any credit bureaux either. It is believed that non-sufficient funds declines data is a particularly good indicator of when an account holder is experiencing financial distress and therefore whether an account holder is likely to be a high credit risk to an issuer. Ultimately, following application of the presently claimed method to its operations, an issuer may be able to increase its share of a particular credit market, for example the credit card market, and/or increase its credit card acquisition due to the availability of a more accurate assessment of the credit risk of individuals.

The method may also be used in conjunction with other methods of assessing credit risk. Such methods may be based on default probability, credit exposure and/or recovery rate, and more specifically, they may take into account parameters such as the individual's income, existing loans and debt, and/or homeownership status, for example.

In preferred embodiments, the step of applying the one or more rules comprises setting a score for the individual account holder and said scores may be set by applying formulas using regression models. Said score may be a number, a percentage, a grade or any other indicator for facilitating credit risk assessments of individual account holders.

The past transactions for which the non-sufficient funds declines data is obtained are preferably debit card transactions. Typically, non-sufficient funds declines are associated with debit card transactions rather than credit card transactions because a debit account is more susceptible to having insufficient funds (on debit held on the account or exceeding arranged overdraft) than a credit account, which is more likely to allow an account holder to exceed an agreed credit limit on the basis that repayments will also be subject to interest repayments.

The step of deriving the one or more rules may be based on an adaptive algorithm or based on an algorithm with adaptive variants. In other words, the algorithm may change its behaviour based on updated or real-time information or the algorithm parameters are automatically adjusted as more data is collated.

A step of assessing whether the likelihood of a non-sufficient funds decline occurring during a subsequent individual outcome window for that individual is over a predetermined threshold may be performed after the likelihood is determined, which results in a binary outcome. Depending on whether the likelihood of a non-sufficient funds decline is over or below the predetermined threshold, the card issuer may choose to make certain decisions relating to card issuance for both prospective and existing account holders or impose certain restrictions on an existing account holder, for example.

In accordance with a second aspect of the present invention, there is provided a computer readable medium, the computer readable medium comprising: a memory device comprising a set of program instructions which, when executed by a processor, causes the processor to perform the method steps as described above.

In accordance with a third aspect of the present invention, there is provided a system for assessing credit risk, the system comprising: a processor; and a memory; wherein the processor and the memory are in communication with one another, wherein the memory is configured to store program instructions, and wherein the processor is configured to execute the program instructions to perform the method steps as described above.

### Brief Description of the Drawings

Certain preferred embodiments of the present invention will now be described by way of example only and contrasted to comparative examples with reference to the accompanying drawings, in which:
Figure 1 is a flow diagram showing the steps of a method in accordance with an embodiment of the present invention;
Figure 2 is a flow diagram showing the steps of a method in accordance with another embodiment of the present invention;
Figure 3 represents exemplary time windows that are applicable to some embodiments of the present invention; and
Figure 4 is a schematic diagram of the system for assessing credit risk in accordance with an embodiment of the present invention.

### Detailed Description of the Drawings

Issuing financial institutions (or issuers) are institutions that provide financial services for its customers; for example, debit or credit account services. An account holder is therefore a customer of the issuer and each account holder carries a certain amount of credit risk to the issuer. Thus, issuers may assess the credit risk of individual account holders using exemplary methods of the present invention in order to assist in the decision making process of whether to issue credit to a particular individual.

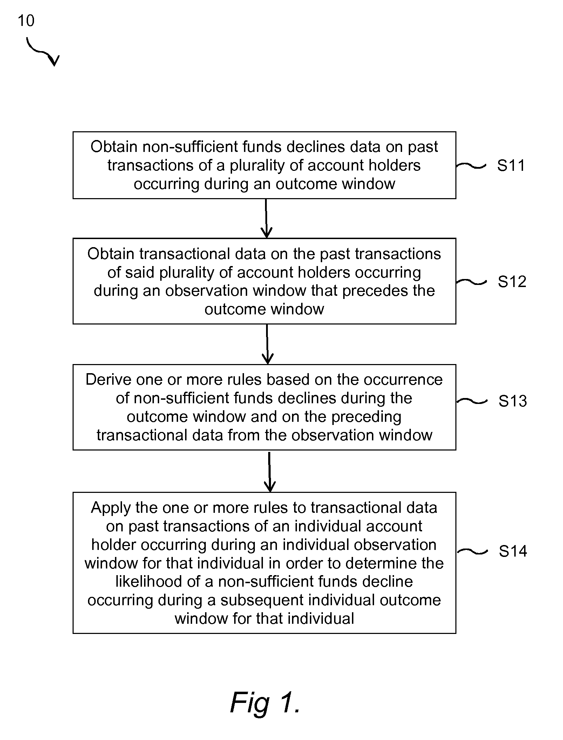

Figure 1 shows an exemplary flow diagram 10 representing a method of assessing credit risk, and its steps will be described in further detail below.

The first step is obtaining non-sufficient funds declines data on past transactions of a plurality of account holders occurring during an outcome window (S11). It is preferable that the non-sufficient funds declines data are collated over a large number past transactions (say, ten thousand transactions) so that global trends may be reliably extracted from the data set. It is also preferable that the past transactions from which the non-sufficient funds declines data are obtained are debit card transactions as it is believed that the occurrence of non-sufficient funds declines on debit card transactions are a good indicator of whether an account holder is experiencing financial distress and therefore whether they represent a high credit risk to issuers.

The second step is obtaining transactional data on the past transactions of said plurality of account holders occurring during an observation window that precedes the outcome window (S12). Transactional data may comprise information associated with specific past transactions, for example, information on the geographical location or merchant category of the past transaction, or the amount or frequency of transactions of the account holder who performed the past transaction. It will be appreciated that the observation window and the outcome window (and similarly the individual observation window and individual outcome window) may never overlap; however, there may be a period of time between the observation window and the outcome window, for example, one month. It will also be appreciated that the observation window and the individual observation window may overlap, or the individual observation window may occur immediately subsequently to the observation window, or the individual observation window may occur subsequently and at a period of time later than the observation window. It will further be appreciated that the outcome window and the individual outcome window may not overlap, but the individual outcome window may occur immediately subsequently to the outcome window, or the individual outcome window may occur subsequently and at a period of time later than the outcome window

The third step is deriving one or more rules based on the occurrence of non-sufficient funds declines during the outcome window and on the preceding transactional data from the observation window (S13). As mentioned above, the availability of large data sets may dictate how accurately these rules reflect actual non-sufficient funds declines trends in the current market. In this step, the one or more rules comprise at least one algorithmic model based on the correlation between normalised indices of card activity of the plurality of account holders, and they may be based on trends of particular geographical location, merchant category, or demographic, etc., or alternatively, the one or more rules may be based across a range of geographic locations, merchant categories and/or demographics etc. In one particular example, a rule may be derived in that London-based transactions represent high likelihood of a non-sufficient funds decline occurring during a subsequent individual outcome window for an individual. In another particular example, a rule may be derived in that transactions over £1000 represent high likelihood of a non-sufficient funds decline occurring during a subsequent individual outcome window for an individual. In yet another particular example, a rule may be derived in that a sequence of transactions, for example across a range of different merchant categories, within a short period of time represents high likelihood of a non-sufficient funds decline occurring during a subsequent individual outcome window.

The fourth step is applying the one or more rules to transactional data on past transactions of an individual account holder occurring during an individual observation window for that individual in order to determine the likelihood of a non-sufficient funds decline occurring during a subsequent individual outcome window for that individual (S14). The one or more rules may be applied at account level (i.e. each individual account holder is assessed separately) or more generally the one or more rules may be applied for categories of account holders (for example, account holders may grouped by geographical locations at postcode level).

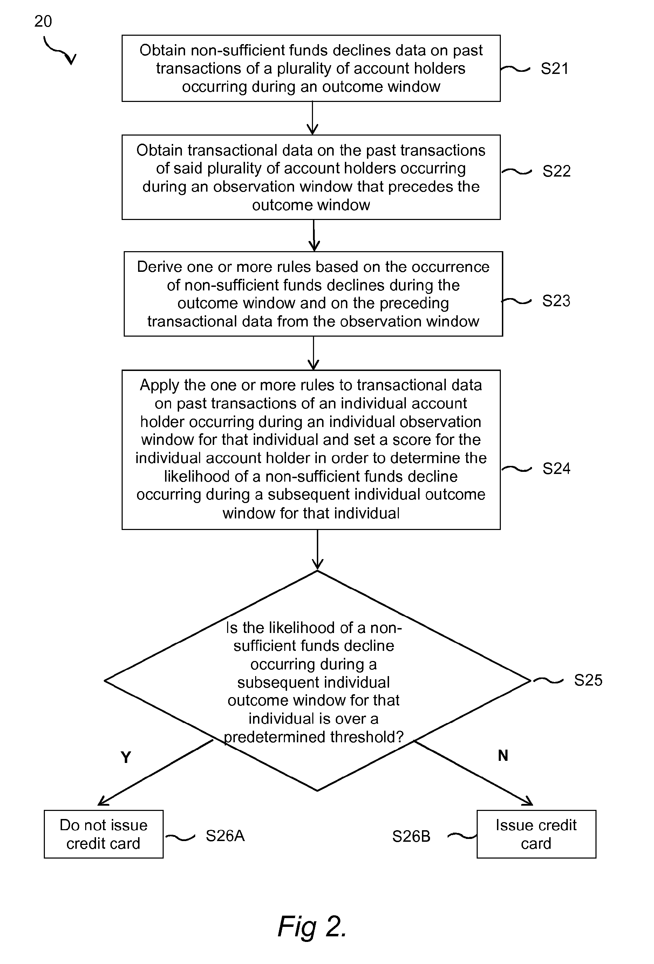

Figure 2 shows another exemplary flow diagram 20 representing a method of assessing credit risk, and its steps will be described in further detail below.

The first step is obtaining non-sufficient funds declines data on past transactions of a plurality of account holders occurring during an outcome window (S21). The second step is obtaining transactional data on the past transactions of said plurality of account holders occurring during an observation window that precedes the outcome window (S22). The third step is deriving one or more rules based on the occurrence of non-sufficient funds declines during the outcome window and on the preceding transactional data from the observation window (S23). Details for each of steps S21 to S23 of Figure 2 may correspond to the above description for steps S11 to S13 of Figure 1.

The fourth step is applying the one or more rules to transactional data on past transactions of an individual account holder occurring during an individual observation window for that individual and setting a score for the individual account holder in order to determine the likelihood of a non-sufficient funds decline occurring during a subsequent individual outcome window for that individual (S24). The one or more rules define at least one algorithmic model which attaches a score to represent propensity of an individual account holder to experience non-sufficient funds declines. The score could be a number, a percentage or a grade. In one example, the score could be a percentage (with 0% representing low credit risk and 100% representing high credit risk). In another example, the score could be a grade between A and D (with A representing low credit risk and D representing high credit risk). The predetermined threshold could, for example, be 60% or a grade B.

The fifth step is assessing whether the likelihood of a non-sufficient funds decline occurring during a subsequent individual outcome window for that individual is over a predetermined threshold (S25) i.e. a binary outcome is produced.

In a first scenario, the likelihood of a non-sufficient funds decline occurring during a subsequent individual outcome window for that individual is over the predetermined threshold and so the issuer does not issue a credit card (S26A). Although not shown in Figure 2, the issuer may alternatively choose to impose a different measure such as reducing credit limit on an existing account.

In a second scenario, the likelihood of a non-sufficient funds decline occurring during a subsequent individual outcome window for that individual is not over the predetermined threshold and so the issuer issues a credit card (S26B). Although not shown in Figure 2, the issuer may alternatively choose to impose a different measure such as increasing credit limit on an existing account.

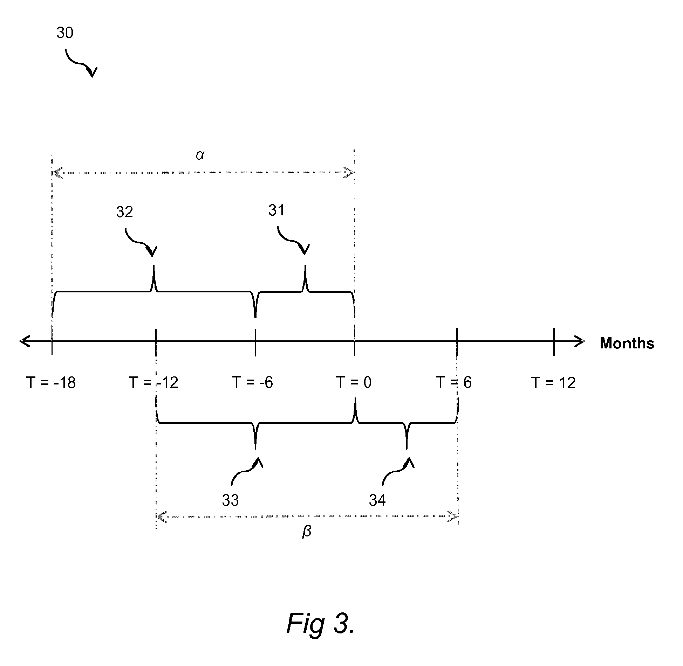

Figure 3 represents exemplary time windows that are applicable to some embodiments of the present invention, for example, the embodiments of Figure 1 or Figure 2, on a timeline 30. In Figure 3, the timeline 30 shows intervals of time (in months) between T = -18 and T = 12, and the present day is indicated at T = 0. Non-sufficient funds declines data is obtained during outcome window 31 and transactional data is obtained during observation window 32. After one or more rules are derived based on the occurrence of non-sufficient funds declines during the outcome window 31 and on the preceding transactional data from the observation window 32, said one or more rules are applied to transactional data on past transactions of an individual account holder occurring during an individual observation window 33 in order to determine the likelihood of a non-sufficient funds decline occurring during a subsequent individual outcome window 34 for that individual.

In the example of Figure 3, outcome window 31 runs from T = -6 to T = 0, individual outcome window 34 runs from T = 0 to T = 6, and each the outcome window 31 and the individual outcome window 34 represent a period of six months. Observation window 32 runs from T = -18 to T =-6, individual observation window 33 runs from T = -12 to T = 0, and each the outcome window 32 and the individual outcome window 33 represent a period of twelve months.

The one or more rules may be derived based on an adaptive algorithm or based on an algorithm with adaptive variants. In other words, the algorithm may change its behaviour based on updated or real-time information or the algorithm parameters are automatically adjusted as more data is collated as time progresses past T = 0. As time progresses, the outcome window 31, observation window 32, the individual observation window and the individual outcome window may shift correspondingly in a way such that their relationship with one another remain constant, i.e. outcome window 31 begins when observation window 32 ends, individual outcome window 34 begins when individual observation window 33 ends, and outcome window 31 and individual observation window 33 end simultaneously.

It is preferable that the outcome window 31 and the individual outcome window 34 are of equal time periods and also that the observation window 32 and the individual observation window 33 are of equal time periods. This makes it easier for the one or more rules that have been derived from data obtained during the outcome window 31 and observation window 32 to be applied to the individual observation window 33 for determining an outcome in individual outcome window 34. Consequently, time periods α (the aggregate time period of the outcome window 31 and the observation window 32) and β (the aggregate time period of the individual outcome window 34 and the individual observation window 33) are also preferably equal.

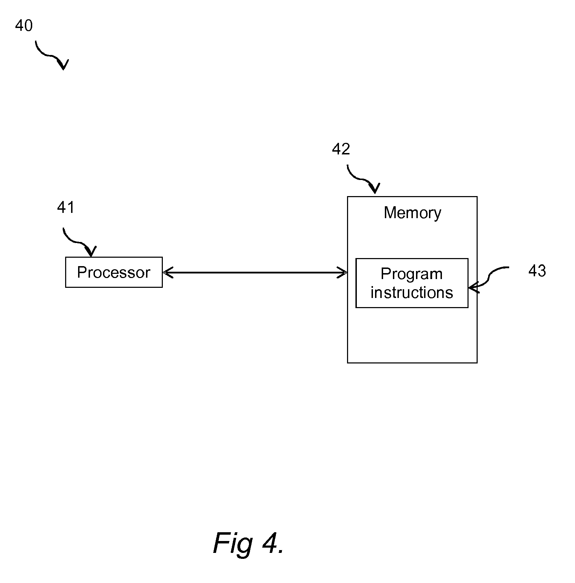

Figure 4 shows an exemplary system 40 for assessing credit risk in accordance with an embodiment of the present invention, the system 40 comprising a processor 41 and a memory 42, wherein the processor 41 and the memory 42 are in communication with one another, wherein the memory 42 is configured to store program instructions 43, and wherein the processor is configured to execute the program instructions 43 to perform the method steps as described above with reference to Figures 1 and 2.

It will be appreciated that the flowcharts described above should not be understood to prescribe a fixed order in which the method steps must be performed, rather, the method steps may be performed in any order that is practicable. It will also be appreciated that features that are described in the context of separate embodiments may be provided in combination in a single embodiment, and conversely, features that are described in the context of a single embodiment may also be provided separately or in any suitable subcombination.

## Claims

1. A computer-implemented method of assessing credit risk, the method comprising the steps of:
obtaining non-sufficient funds declines data on past transactions of a plurality of account holders occurring during an outcome window;
obtaining transactional data on the past transactions of said plurality of account holders occurring during an observation window that precedes the outcome window;
deriving one or more rules based on the occurrence of non-sufficient funds declines during the outcome window and on the preceding transactional data from the observation window; and
applying the one or more rules to transactional data on past transactions of an individual account holder occurring during an individual observation window for that individual in order to determine the likelihood of a non-sufficient funds decline occurring during a subsequent individual outcome window for that individual.

2. A method according to claim 1, wherein the step of applying the one or more rules comprises setting a score for the individual account holder.

3. A method according to claim 1 or 2, wherein the past transactions are debit card transactions.

4. A method according to any one of the preceding claims, wherein each observation window represents a period of twelve months.

5. A method according to any one of the preceding claims, wherein each outcome window represents a period of six months.

6. A method according to any one or the preceding claims, wherein the step of deriving the one or more rules is based on an adaptive algorithm.

7. A method according to any one of the preceding claims, wherein the transactional data comprises information on the geographical location and/or merchant category of the past transaction.

8. A method according to any one of the preceding claims, wherein the method further comprises a step of assessing whether the likelihood of a non-sufficient funds decline occurring during a subsequent individual outcome window for that individual is over a predetermined threshold.

9. A computer readable medium, the computer readable medium comprising:
a memory device comprising a set of program instructions which, when executed by a processor, causes the processor to perform the method steps of any one of the preceding claims.

10. A system for assessing credit risk, the system comprising:
a processor; and
a memory;
wherein the processor and the memory are in communication with one another, wherein the memory is configured to store program instructions. and wherein the processor is configured to execute the program instructions to perform the method steps of any one of claims 1 to 8.
